# EUROPÄISCHE PATENTSCHRIFT

(11) **EP 3 719 330 B1**
(45) Veröffentlichungstag und Bekanntmachung des Hinweises auf die Patenterteilung: **30.03.2022**
(21) Anmeldenummer: 20170501.9
(22) Anmeldetag: 11.12.2015
(51) Int. Cl.: F16B 25/00

(54) **SCHRAUBE MIT DISKONTINUITÄT AN ZWISCHENGEWINDEABSCHNITT**
SCREW WITH DISCONTINUITY AT THE SECTION BETWEEN THREADS
VIS AVEC UNE DISCONTINUITÉ SUR UNE SECTION DE FILETAGE INTERMÉDIAIRE

(30) Priorität: 05.01.2015 DE 102015100037
(43) Veröffentlichungstag der Anmeldung: 07.10.2020
(62) Teilanmeldung aus: 15199631.1
(73) Patentinhaber: Adolf Würth GmbH & Co. KG, 74653 Künzelsau (DE); Würth International AG, 7000 Chur (CH)
(72) Erfinder: Eckert, Rainer, 97990 Weikersheim (DE); Wunderlich, Andreas, 74635 Kupferzell (DE)
(74) Vertreter: Dilg, Haeusler, Schindelmann Patentanwaltsgesellschaft mbH

(56) Entgegenhaltungen:
- EP-A2- 1 892 425
- DE-A1- 3 615 271
- DE-C- 54 903
- DE-U1-202011 000 982
- GB-A- 2 042 120
- US-A1- 2013 336 744

## Beschreibung

Die Erfindung betrifft eine Schraube, ein Verfahren zum Einbringen einer Schraube in einen Untergrund, ein Verfahren zum Herstellen einer Schraube und eine Verwendung.

Eine Schraube ist ein Bolzen, der einen Antrieb aufweisen kann, wobei der Bolzen außen mit einem Gewinde versehen ist. Bei Schrauben mit Kopf dient die Ringfläche unter dem Kopf als Anschlag gegen das mit ihm zu befestigende Teil.

Aus EP 0,589,398 B1 bzw. DE 10 2010 028 344 A1 ist für einen Untergrund aus Kunststoff oder einem Leichtmetall bekannt, eine Schraube mit einem Gewinde in den Untergrund einzudrehen, wobei zwischen den Gewindegängen nichtzylindrische Kernabschnitte angeordnet sind, die sich in Richtung Schraubenkopf verjüngen. Dadurch soll das bei dem Eindrehen verdrängte Material des Untergrunds aus Kunststoff oder Leichtmetall längs jedes Kernabschnittes lediglich in eine rückseitige Richtung bis in den Kernabschnittsbereich kleinsten Durchmessers fließen, um nach einem in aller Regel zuvor durchgeführten Vorbohren ein verringertes Einschraubmoment der Schraube beim Eindrehen zu ermöglichen.

US 2007/0147973 A1 offenbart ein mit einem Gewinde versehenes Befestigungsmittel für Verbundwerkstoffe, welches einen Kopf und einen Schaft aufweist. Der Kopf ist an einem Ende des Schafts angebracht und der Schaft weist ferner an seinem anderen Ende eine Spitze auf. Ein Durchmesser des Schafts in dem unteren Gewindeabschnitt ist größer als ein Durchmesser des Schafts in einem oberen Gewindeabschnitt. Somit können, wenn das Befestigungsmittel innerhalb des Werkstücks rotiert wird, erzeugte Materialreste in dem oberen Gewindeabschnitt gesammelt werden.

US 6,669,424 B1 offenbart eine geschraubte Verbindung, welche ein erstes Verbindungsmittel mit einem Außengewinde und ein zweites Verbindungsmittel mit einem Innengewinde aufweist. Zur Vermeidung einer Selbstlockerung der geschraubten Verbindung weist das Außengewinde eine Verzahnung auf, welche mit einer zusammenpassenden Verzahnung des Innengewindes interagiert.

US 5,570,983 A offenbart eine reibungsreduzierte Schraube. Die Schraube benötigt zum Eindrehen in ein Werkstück weniger Drehmoment als eine konventionelle Schraube. Der Schaft der Schraube weist ein Gewinde mit reduzierter Dicke auf, welches weniger Gleitreibung produziert als eine konventionelle Schraube mit einem gleichbleibend tiefen Gewinde. Zum Verhindern eines Lösens der Schraube ist der Kopf an seiner Unterseite mit Vorsprüngen versehen, welche die Reibung zwischen Werkstück und Kopf erhöhen.

DE 81 03 990 U1 offenbart eine selbstfurchende Schraube mit mindestens zwei vorspringenden Gewindegänge bildenden gleich profilierten parallelen Wendeln, einem Flankenwinkel der vorspringenden Gewindegänge von weniger als 45°, einem großen Steigungswinkel und Einschnürungen am Gewindekern zwischen benachbarten Wendeln, deren engste Stelle etwa in der Mitte zwischen zwei benachbarten Gewindegängen liegt. Der Kern verjüngt sich ausgehend von den Fußenden benachbarter Gewindegänge. Die Schraube ist dadurch gekennzeichnet, dass der Steigungswinkel am Außendurchmesser der vorspringenden Gewindegänge zwischen 5° und 12° liegt. Ferner ist die Schraube dadurch gekennzeichnet, dass das Verhältnis zwischen Außendurchmesser und dem an der engsten Stelle der Einschnürung gemessenen Kerndurchmesser kleiner als 1,5 und größer als 1,2 ist.

DE 103 41 401 A1 offenbart eine Verbundeinrichtung für eine Holz-Beton-Verbindung. Die Holz-Beton-Verbindung umfasst eine Verbundschraube, die einen Schraubenschaft und einen Schraubenkopf aufweist. Der Schraubenschaft weist einen Holzeingriffabschnitt und einen Betoneinbettungsabschnitt auf. Der Betoneinbettungsabschnitt ist in Richtung der Längsachse der Verbundschraube benachbart zu dem Schraubenkopf angeordnet und der Holzeingriffabschnitt ist in Richtung der Längsachse der Verbundschraube entfernt zu dem Schraubenkopf angeordnet. Der Holzeingriffabschnitt ist mit einem Holzgewinde versehen. Der Betoneinbettungsabschnitt weist entlang der Verbundschraubenlängsachse im Wesentlichen über seiner gesamten Länge kontinuierliche oder diskrete Längsabstützzonen auf, welche sich im Wesentlichen oder vollständig in Richtung der Verbundschraubenlängsachse erstrecken. DE 54 903 C zeigt eine Holzschraube nach dem Stand der Technik mit Diskontinuitäten zwischen den Gewindegängen.

DE 33 37 534 A1 offenbart eine selbstbohrende und/oder selbstformende Universalschraube mit einer im Schraubenkopf vorgesehenen Kupplung zur Übertragung des Drehmoments, einem Schaft und einer Bohrerspitze. Die Universalschraube ist dadurch gekennzeichnet, dass die Schraubenspitze einen Gewindegang mit gleichmäßigem Scheitelwinkel aufweist, und dass die Spitze in Umfangsrichtung durch aufeinander anschließende, diskontinuierliche, insbesondere konvexe und konkave Formabschnitte des Innenkreises des Querschnittes am spitzen Anfang bei null beginnt und mit zunehmendem Abstand von der Spitze bis zum Übergang in den Gewindegang zunimmt.

Für das Einbringen einer Schraube in einen Untergrund aus Kunststoff ist vorgesehen, in dem Kunststoffuntergrund ein Loch vorzubohren bzw. dieses beim Spritzen vorzusehen (Urformen) und nachfolgend eine Schraube in das Loch einzudrehen. Das Loch wird mit einem Durchmesser vorgebohrt, der größer als der Schaftdurchmesser der Schraube ist. Dabei können Abschnitte einer Schraube für einen Kunststoffuntergrund zwischen benachbarten Gewindegängen eine von einer Kreiszylindergeometrie abweichende Gestalt haben. Bei einer als RST bezeichneten Schraube der Firma Reyher zum Eindrehen in einen vorgebohrten Kunststoffuntergrund können Abschnitte der Schraube zwischen benachbarten Gewindegängen vom Schraubenkopf weg zum gegenüberliegenden Schraubenende hin verjüngend ausgebildet sein. Anschaulich schneiden sich die hohen Gewindegänge solcher Schrauben für Kunststoffuntergründe in das Kunststoffmaterial ein, das an das vorgebohrte Bohrloch angrenzt. Anders ausgedrückt beruht die Verankerungswirkung solcher Schrauben für Kunststoffuntergründe einzig auf der Verankerung der Gewindegänge in dem vorgebohrten Untergrund, wohingegen der Schraubenschaft in dem vorgebohrten Bohrloch im Wesentlichen frei liegt.

Gänzlich andere technische Prinzipien und physikalische Rahmenbedingungen als für Untergründe aus Kunststoff oder Leichtmetall gelten für das Einbringen einer Schraube in Holz. Beim Einbringen einer Schraube in Holz wird auf das Bilden einer Vorbohrung in der Regel verzichtet, vielmehr wird eine Holzschraube typischerweise in einen massiven Holzuntergrund vorbohrungsfrei eingedreht. Dabei schneidet sich das Gewinde einer Holzschraube in dem Holzuntergrund sein Gegengewinde selbst. Ein Beispiel für eine bekannte Holzschraube ist die von der Firma Würth vertriebene Schraube Assy Plus oder Assy 3.0. Ein Maß für die Güte der Verankerung einer Holzschraube in einem Holzuntergrund ist der Auszugswert. Damit wird die Zugkraft bezeichnet, die zum Herausziehen der Holzschraube aus dem Holzuntergrund, mithin zum Überwinden der Haltekraft der Holzschraube in dem Holzuntergrund, erforderlich ist.

Wenngleich die bekannte Holzschraube vom Typ Assy Plus bzw. Assy 3.0 bereits sehr gute Auszugswerte zeigt, wäre eine weiter verbesserte Auszugsfestigkeit einer Holzschraube dennoch wünschenswert. Eine solche Schraube soll natürlich hinsichtlich der Fertigbarkeit günstige Eigenschaften aufweisen.

Es ist eine Aufgabe der vorliegenden Erfindung, eine einfach herstellbare Schraube mit hoher Haltekraft bereitzustellen.

Diese Aufgabe wird durch die Gegenstände mit den Merkmalen gemäß den unabhängigen Patentansprüchen gelöst. Weitere Ausführungsbeispiele sind in den abhängigen Ansprüchen gezeigt.

Gemäß einem Ausführungsbeispiel der vorliegenden Erfindung ist eine Schraube bereitgestellt, die einen sich axial erstreckenden Schaftabschnitt und ein Gewinde an dem Schaftabschnitt aufweist, das ausgehend von dem Schaftabschnitt sich radial erstreckende Gewindegänge aufweist, wobei der Schaftabschnitt an einem Zwischengewindeabschnitt zwischen benachbarten Gewindegängen eine (insbesondere eine durchgehende Achsparallelität unterbrechende) Diskontinuität aufweist.

Gemäß einem weiteren Ausführungsbeispiel der vorliegenden Erfindung ist ein Verfahren zum Einbringen einer Schraube in einen Untergrund geschaffen, wobei bei dem Verfahren eine Schraubenspitze, insbesondere vorbohrungsfrei, an einem vorderseitigen Ende der Schraube an den Untergrund angesetzt wird, und die Schraube mittels Betätigens eines Schraubenkopfs an einem rückseitigen Ende der Schraube zum Ausüben einer Setzkraft auf die Schraube derart angetrieben wird, dass die Schraubenspitze in den Untergrund eindringt und ein Gewinde an einem sich axial erstreckenden Schaftabschnitt der Schraube zwischen Schraubenspitze und Schraubenkopf, insbesondere selbstschneidend, ein Gegengewinde in dem Untergrund schneidet, wobei an dem Schaftabschnitt zwischen benachbarten, ausgehend von dem Schaftabschnitt sich radial erstreckenden Gewindegängen eine (insbesondere eine von einer Achsparallelität abweichende) Diskontinuität ausgebildet ist, in deren Umgebungsbereich hinein beim axialen Eindringen der Schraube in den Untergrund Material des Untergrunds verdrängt wird.

Gemäß noch einem anderen Ausführungsbeispiel der vorliegenden Erfindung ist ein Verfahren zum Herstellen einer Schraube (insbesondere einer Holzschraube) zum (insbesondere vorbohrungsfreien) Einbringen in einen Untergrund (insbesondere einen Holzuntergrund) geschaffen, wobei bei dem Verfahren ein sich axial erstreckender Schaftabschnitt ausgebildet wird, ein Gewinde an dem Schaftabschnitt ausgebildet wird, das mit sich ausgehend von dem Schaftabschnitt radial erstreckenden Gewindegängen versehen wird, und eine (insbesondere von einer Achsparallelität abweichende) Diskontinuität an dem Schaftabschnitt an einem Zwischengewindeabschnitt zwischen benachbarten Gewindegängen ausgebildet wird.

Gemäß einem weiteren Ausführungsbeispiel der vorliegenden Erfindung wird eine Schraube mit den oben beschriebenen Merkmalen zum insbesondere vorbohrungsfreien Einbringen in einen Holzuntergrund verwendet.

Im Rahmen dieser Anmeldung wird unter dem Begriff "Diskontinuität" insbesondere ein Oberflächenstrukturmerkmal innerhalb des Zwischengewindeabschnitts verstanden, an welchem Oberflächenstrukturmerkmal sich (insbesondere in einer Querschnittsansicht entlang einer Ebene, welche die Schraubenachse enthält) die Steigung der Oberflächentrajektorie des Zwischengewindeabschnitts ändert, insbesondere abrupt oder unstetig (im Sinne einer fehlenden mathematischen Ableitbarkeit an dieser Stelle) ändert. Das Vorzeichen der Steigung (d.h. der ersten Ableitung) der Kurve der externen Oberfläche des Zwischengewindeabschnitts in axialer Richtung kann sich an der Stelle der Diskontinuität von Plus nach Minus, von Minus nach Plus, von Null nach Plus, von Null nach Minus oder von Null, Plus oder Minus nach unendlich ändern. Der Verlauf der Kurve an der Stelle der Diskontinuität kann eckig oder abgerundet erfolgen. Durch die Diskontinuität kann ein Aufnahmeraum zum Aufnehmen von mittels der Schraube verdrängtem Material des Untergrunds gebildet werden. Insbesondere wird unter einer Diskontinuität ein Verlauf verstanden, der weder eine durchgehende Achsparallelität mit konstantem Radius entlang des gesamten Zwischengewindeabschnitts noch eine Abschrägung kontinuierlicher Steigung entlang des gesamten Zwischengewindeabschnitts darstellt.

Gemäß einem Ausführungsbeispiel ist eine Schraube bereitgestellt, mit der eine hohe Haltekraft in einem Untergrund dadurch erreicht werden kann, dass sich nicht nur das Gewinde in dem Material des Untergrunds ein verankerndes Gegengewinde bildet, sondern zusätzlich auch zumindest ein durch die Diskontinuität abgegrenzter Teilabschnitt des Zwischengewindeabschnitts zwischen benachbarten Gewindegängen bei einem sukzessiven axialen Vortrieb der Schraube in radialer Richtung Material des Untergrunds verdrängt und dieses dadurch komprimiert. Neben großen Bereichen der Gewindeflanken wird auch zumindest ein Teilabschnitt des diskontinuierlich von einer durchgehenden Achsparallelität abweichenden Zwischengewindeabschnitts zwischen den Gewindegängen kraft- bzw. reibschlüssig gegen das Material des Untergrunds gepresst und erhöht somit die Verankerungskraft. Der durch das Einbringen des Gewindes in den Untergrund erzeugte Zwangsvorschub der Schraube in den Untergrund hinein führt aufgrund der nicht durchgehend uniradial achsparallel ausgebildeten Gewindezwischenabschnitte auch zu einer zusätzlichen Komponente der Verankerungskraft. Dadurch wird die Haltekraft der Schraube gegenüber herkömmlichen Schrauben verbessert bzw. werden die Auszugswerte erhöht. Ferner kann zudem ohne das Erfordernis des Hinzufügens weiteren Schraubenkernmaterials, anschaulich also durch bloßes Umlagern von Schraubenkernmaterial, vorzugsweise von vorne (d.h. von einem schraubenspitzenseitigen Bereich des Zwischengewindeabschnitts) nach hinten (d.h. zu einem schraubenkopfseitigen Bereich des Zwischengewindeabschnitts), die Haltekraft verbessert werden.

Schrauben gemäß exemplarischen Ausführungsbeispielen haben darüber hinaus noch einen weiteren signifikanten Vorteil: Beim Herstellen der Schraube (zum Beispiel mittels Walzens der Schraube) ist ein unerwünschtes Axialverschieben des Schraubenschafts dank der Diskontinuität vermieden, sodass die Schraube einfach und reproduzierbar herstellbar ist. Es hat sich gezeigt, dass beim Herstellen von Schrauben mit kontinuierlichem Zwischengewindeabschnitt, insbesondere wenn diese unter Bildung einer von Null abweichenden Steigung im Bereich des Zwischengewindeabschnitts abgeschrägt sind, derartige Schrauben eine Tendenz haben können, während des Walzvorgangs unerwünscht längsverschoben zu werden, was die Herstellbarkeit der Schraube mit reproduzierbaren Eigenschaften erschwert. Die Diskontinuität hemmt vorteilhaft diese Tendenz.

Gemäß einem Ausführungsbeispiel ist somit eine vorteilhaft als Holzschraube einsetzbare Schraube bereitgestellt, die insbesondere ohne die Notwendigkeit des Bildens eines Bohrlochs vor dem Einbringen in einen Holzuntergrund vorzugsweise selbstschneidend bzw. selbstbohrend in Letzterem verankert werden kann.

Im Weiteren werden zusätzliche exemplarische Ausführungsbeispiele der Schraube, der Verfahren und der Verwendung beschrieben.

Erfindungsgemäß ist die Diskontinuität an dem Zwischengewindeabschnitt als Stufe ausgebildet.

Eine als Stufe ausgebildete Diskontinuität ist herstellungstechnisch einfach, erhöht in signifikanter Weise die Auszugskraft und unterdrückt bei der Herstellung mittels Walzens wirksam, den Schaftabschnitt in unerwünschter Weise längszuverschieben.

Erfindungsgemäß ist die Stufe zwischen zwei achsparallelen Abschnitten des Zwischengewindeabschnitts mit unterschiedlichen Radien ausgebildet. Der Zwischengewindeabschnitt ist durch zwei ( im Wesentlichen kreiszylindrische) Abschnitte mit mit der Schraubenachse zusammenfallenden (d.h. identischen) Achsen gebildet, welche Abschnitte sich in einer Ebene senkrecht zu der Schraubenachse unterschiedlich weit radial nach außen erstrecken. Im Übergangsbereich zwischen diesen Abschnitten ist eine Stufe vorgesehen, die gegenüber jedem dieser Abschnitte rechtwinklig abgewinkelt ist.

Gemäß einem exemplarischen Ausführungsbeispiel kann der achsparallele Abschnitt mit dem größeren Radius schraubenkopfseitig und der achsparallele Abschnitt mit dem kleineren Radius schraubenspitzenseitig angeordnet sein.

Damit verjüngt sich der Zwischengewindeabschnitt gestuft hin zur Schraubenspitze, was zu einem hohen Bruchdrehmoment führt. Ein unerwünschter Schraubenbruch beim Einwirken mechanischer Lasten kann dadurch wirksam unterdrückt werden.

Gemäß einem exemplarischen Ausführungsbeispiel kann der achsparallele Abschnitt mit dem größeren Radius einen Durchmesser in einem Bereich zwischen 65 % und 85 % eines Außendurchmessers des Gewindes aufweisen. Insbesondere kann der achsparallele Abschnitt mit dem größeren Radius einen Durchmesser im Bereich des Drahtdurchmessers eines Drahts haben, der als Rohmaterial zum Walzen der Schraube verwendet werden kann.

Gemäß einem exemplarischen Ausführungsbeispiel kann der achsparallele Abschnitt mit dem kleineren Radius einen Durchmesser in einem Bereich zwischen 40 % und 60 % eines Außendurchmessers des Gewindes aufweisen. Durch einen achsnahen Abschnitt mit einem ausreichend kleinen Radius kann ein ausreichend großer Aufnahmeraum zum Aufnehmen verdrängten Materials des Untergrunds geschaffen werden. Gleichzeitig kann durch einen achsparallelen Abschnitt mit einem ausreichend großen Radius unerwünschter Schraubenbruch beim Einwirken mechanischer Lasten unterdrückt werden und dadurch ein hohes Bruchdrehmoment erreicht werden. Der genannte Wertebereich ist hinsichtlich beider Kriterien gut geeignet.

Gemäß einem exemplarischen Ausführungsbeispiel erstreckt sich die Diskontinuität in radialer Richtung weniger weit nach außen als die radial äußeren Enden des Gewindes. Dadurch wird sichergestellt, dass die Diskontinuität die Gewindefunktion nicht stört oder beeinflusst.

Erfindungsgemäß weist der Zwischengewindeabschnitt an der Stufe eine im Wesentlichen senkrecht zu einer Schraubenachse verlaufende Übergangsfläche auf. Bei einer derart ausgeprägten Stufe ist die Tendenz zu einem unerwünschten Axialverschieben während des Walzens besonders wirksam vermieden, da die senkrechte Übergangsfläche auch als Verrutschschutz dient.

Gemäß einem exemplarischen Ausführungsbeispiel kann die Diskontinuität als Knickstelle, insbesondere als gegenüber dem Rest des Zwischengewindeabschnitts nach außen überstehende Kante, zwischen einem ersten Teilabschnitt des Zwischengewindeabschnitts und einem zweiten Teilabschnitt des Zwischengewindeabschnitts ausgebildet sein. Eine solche Knickstelle kann einen abrupten Übergang bewirken, der die Herstellbarkeit der Schraube vereinfacht. Gleichzeitig kann dadurch ein definierter Aufnahmeraum für Material des Untergrunds bereitgestellt werden.

Gemäß einem exemplarischen Ausführungsbeispiel kann an dem Schaftabschnitt zwischen mehr als der Hälfte, bevorzugt zwischen mehr als 75 %, weiter bevorzugt zwischen mehr als 90 %, und höchst bevorzugt zwischen allen benachbarten Gewindegängen ein jeweiliger Zwischengewindeabschnitt mit einer jeweiligen Diskontinuität ausgebildet sein. Besonders bevorzugt können an dem Schaftabschnitt zwischen allen benachbarten Gewindegängen Diskontinuitäten ausgebildet sein. Alternativ kann nur ein Teilabschnitt des Schaftabschnitts mit Diskontinuitäten ausgestattet sein, wohingegen andere Zwischengewindeabschnitte einen kreiszylinderförmigen Schaftteilabschnitt aufweisen können oder einen sich in Richtung des Schraubenkopfs oder der Schraubenspitze verjüngenden Abschnitt. Zwischen dem schraubenkopfnächsten Gewindegang und dem Schraubenkopf kann ebenfalls eine Diskontinuität vorgesehen sein. Zwischen dem schraubenspitzennächsten Gewindegang und der Schraubenspitze kann ebenfalls eine Diskontinuität vorgesehen sein.

Gemäß einem exemplarischen Ausführungsbeispiel können die Zwischengewindeabschnitte mit der Diskontinuität gegenüber einer Schraubenachse derart abweichen, dass ein sich an einen jeweils hinterseitigen Gewindegang anschließendes Zusatzmaterial durch ein sich an den jeweils vorderseitigen Gewindegang anschließendes Fehlmaterial ausgeglichen ist. Anders ausgedrückt kann an einem verdickten Bereich auf einer Seite der Diskontinuität im Vergleich zu einem gedachten, entsprechenden kreiszylindrischen Schraubenkern genau die Materialmenge angelagert sein, die an einem verdünnten Bereich auf einer gegenüberliegenden anderen Seite der Diskontinuität gegenüber der Kreiszylindergeometrie eines massengleichen Schraubenkerns fehlt. In Summe kann damit die Masse eines Zwischengewindeabschnitts mit Diskontinuität der Masse eines entsprechenden, von einer Diskontinuität freien und durchgehend achsparallelen Zwischengewindeabschnitts gleichen. Dies ist vorteilhaft, da sich die Zwischengewindeabschnitte mit Diskontinuität folglich durch eine reine Materialumlagerung (insbesondere mittels Walzens) ausgehend von einem Rohling und somit mit geringerem Aufwand hergestellt werden können als dies bei einem Zusatzmaterial applizierenden Verfahren oder bei einem materialabtragenden Verfahren der Fall wäre.

Gemäß einem exemplarischen Ausführungsbeispiel kann die Schraube als Holzschraube zum, insbesondere vorbohrungsfreien, Einbringen in einen Holzuntergrund, insbesondere in einen massiven Holzuntergrund ausgebildet sein. Die Geometrie der Schraube ist besonders gut dafür geeignet, verdrängtes Holzmaterial eines Holzuntergrunds aufzunehmen. Indem in einen Holzuntergrund die Schraube auch vorbohrungsfrei einbringbar ist, ist eine einfache Montage ermöglicht. Vorzugsweise ist dann das Gewinde auch als selbstschneidendes Gewinde ausgebildet.

Gemäß einem exemplarischen Ausführungsbeispiel kann die Schraube ferner einen an den Schaftabschnitt rückseitig direkt oder indirekt angeschlossenen Schraubenkopf und/oder eine an den Schaftabschnitt vorderseitig direkt oder indirekt angeschlossene Schraubenspitze zum Eindringen in den Untergrund aufweisen. Zwischen Schraubenkopf und Schaftabschnitt kann also optional auch ein gewindefreier Abschnitt vorgesehen sein, insbesondere wenn ein Holzbauteil auf einem anderen Holzbauteil montiert werden soll. Für andere Anwendungen (zum Beispiel Montage eines Metallbauteils auf einem Holzbauteil) kann ein Vollgewinde ohne gewindefreien Abschnitt zwischen Schraubenkopf und Schaftabschnitt eingesetzt werden.

Gemäß einem exemplarischen Ausführungsbeispiel kann ein Flankenwinkel von zumindest einem Teil der Gewindegänge in einem Bereich zwischen ungefähr 30° und ungefähr 70°, insbesondere in einem Bereich zwischen ungefähr 40° und ungefähr 60°, liegen. Derartige Flankenwinkel sind zum Erreichen einer besonders guten Haltekraft vorteilhaft, da dann die Gewindeflanken effizient an das Holz angreifen können.

Gemäß einem exemplarischen Ausführungsbeispiel kann die Schraubenspitze auf ein im Wesentlichen punktförmiges Ende der Schraube zulaufen. Gemäß einem anderen exemplarischen Ausführungsbeispiel kann die Schraubenspitze mindestens eine endseitige Schneidkante aufweisen. Hinsichtlich der Ausgestaltung der Schraubenspitze gibt es somit unterschiedliche Möglichkeiten, wobei die Schraubenspitze vorteilhaft so konfiguriert sein kann, dass die Schraube ohne Vorbohrung in einen massiven Holzuntergrund eingedreht werden kann.

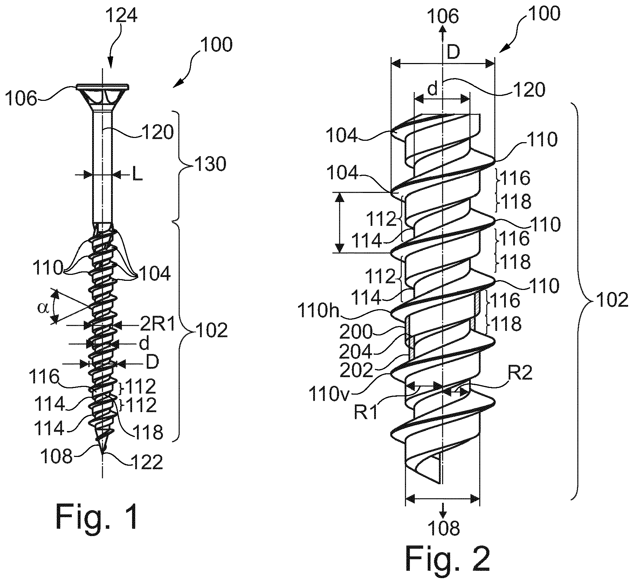

Gemäß einer ersten Ausgestaltung kann die Schraubenspitze als ein punktförmiges Ende der Schraube gebildet sein, wobei sich das Gewinde direkt ausgehend von dem punktförmigen Ende entlang des Schaftabschnitts erstrecken kann. Eine solche Ausgestaltung ist in Figur 1 gezeigt. Wenn der Gewindeansatz direkt an dem punktförmigen Ende beginnt, kann bei Ansetzen des punktförmigen Endes auf die (insbesondere nicht vorgebohrte) Oberfläche eines Holzuntergrunds das Gewinde unmittelbar greifen und mit dem selbstfurchenden bzw. selbstschneidenden Eindringen in den Untergrund beginnen. Mit dieser Ausgestaltung der Schraubenspitze ist ein Vorbohren entbehrlich und ein kraftarmes Einbringen ermöglichst, da der Zwangsvorschub des Gewindes einen Monteur gleich von Beginn des Setzvorgangs an unterstützt.

Gemäß einer alternativen zweiten Ausgestaltung kann die Schraubenspitze als Bohrspitze mit mindestens einer endseitigen Schneidkante ausgebildet sein. Eine solche, zum Beispiel lineare scharfe Schneidkante kann als mindestens eine Hauptschneide ausgebildet sein und wie bei einem Bohrer ein Loch in einem hölzernen Untergrund generieren. Optional kann auch noch mindestens eine Querschneide an der Bohrspitze vorgesehen sein, wie den Fachleuten auf dem Gebiet der Schrauben und Bohrer bekannt.

Gemäß einem exemplarischen Ausführungsbeispiel kann der Schraubenkopf mit einem Antrieb zum Drehantreiben der Schraube versehen sein. Ein solcher Antrieb dient zum formschlüssigen Kontakt mit einem Werkzeug zum Eindrehen der Schraube, wie zum Beispiel ein muskelbetriebener Schraubendreher oder ein motorbetriebenes Setzgerät (zum Beispiel ein Akkuschrauber). Ein rückseitiges Ende der Schraube kann somit durch den Schraubenkopf mit einem Antrieb zum Drehantreiben der Schraube gebildet sein. Der Antrieb kann als Längsschlitz, als Kreuzschlitz, als Imbus, als TORX-Antrieb oder als AW-Antrieb ausgebildet werden.

Erfindungsgemäß ist die Diskontinuität von beiden, den zugehörigen Zwischengewindeabschnitt axial begrenzenden

Gewindegängen axial beabstandet und axial in der Mitte zwischen beiden, den zugehörigen Zwischengewindeabschnitt axial begrenzenden Gewindegängen angeordnet.

Darüber hinaus kann an beiden axialen Grenzen zwischen Zwischengewindeabschnitt und den beiden begrenzenden Gewindegängen jeweils ein abgerundeter oder kantiger Übergang vorgesehen sein, der einen Übergang zwischen Zwischengewindeabschnitt und Gewindegang darstellt.

Gemäß einem exemplarischen Ausführungsbeispiel kann die Diskontinuität um eine Schraubenachse vollumfänglich umlaufen, insbesondere parallel zu den Gewindegängen helikal um die Schraubenachse umlaufen. Somit kann die Diskontinuität, die dann für mehrere oder alle Zwischengewindeabschnitte als zusammenhängende Struktur ausgebildet sein kann, parallel zu Windungen der Gewindegänge verlaufen. Dies erlaubt eine einfache Herstellbarkeit und vermeidet radiale Anfangs- und Endstellen.

Gemäß einem exemplarischen Ausführungsbeispiel kann die Schraube mittels Drehbetätigens eines Antriebs an dem Schraubenkopf angetrieben werden. Zum Beispiel kann ein muskelkraftbetriebener Schraubendreher oder ein motorkraftbetriebenes Schraubgerät eingesetzt werden, um die Schraube drehend in den Untergrund einzubringen. Ein Zwangsvorschub der Schraube in dem Untergrund wird dabei durch das selbstschneidende Gewinde der Schraube bewirkt, was das axiale Eindringen der Schraube in den Untergrund kraftarm ermöglicht.

Gemäß einem anderen exemplarischen Ausführungsbeispiel kann die Schraube mittels Ausübens einer rein oder vorwiegend axialen Setzkraft auf den Schraubenkopf angetrieben werden, insbesondere eingenagelt oder eingeschossen werden. Aufgrund der relativ niedrigen Gewindehöhe einer Schraube gemäß einem exemplarischen Ausführungsbeispiel ist auch ein drehfreies Einbringen der Schraube in einen vorgebohrten oder nicht vorgebohrten Untergrund möglich, zum Beispiel mittels eines entsprechend konfigurierten Bolzenschubwerkzeugs.

Gemäß einem Ausführungsbeispiel kann die Schraube mittels Kaltmassivumformen (zum Ausbilden von Kopf bzw. Antrieb), Kneifen (zum Ausbilden der Schraubenspitze) und Walzen (zum Bilden des Gewindes) ausgebildet werden.

Gemäß einem exemplarischen Ausführungsbeispiel kann die zumindest eine Diskontinuität zumindest teilweise beim Walzen des Gewindes ausgebildet werden. Dabei erfolgt lediglich eine für das Ausbilden der durch die Diskontinuität getrennten Abschnitte eines jeweiligen Zwischengewindeabschnitts ausreichende Materialumlagerung, so dass das Aufbringen oder Entfernen von Material zum Ausbilden des mindestens einen Zwischengewindeabschnitts mit mindestens einer Diskontinuität entbehrlich ist.

Gemäß einem exemplarischen Ausführungsbeispiel kann der mindestens eine Zwischengewindeabschnitt mit Diskontinuität zumindest teilweise beim Kneifen der Schraubenspitze ausgebildet werden. Auch gemäß dieser Ausgestaltung können Diskontinuitäten hergestellt werden, ohne dass hierfür ein separater Arbeitsgang erforderlich ist.

Schrauben gemäß exemplarischen Ausführungsbeispielen der Erfindung können mit symmetrischem oder asymmetrischem Gewinde ausgebildet werden. Bei einem asymmetrischen Gewinde ist die ansteigende Flanke mit einem anderen Anstiegswinkel versehen als die abfallende Flanke, wohingegen bei einem symmetrischen Gewinde der Winkel der ansteigenden Flanke und jener der abfallenden Flanke gleich sind. Erfindungsgemäße Schrauben (insbesondere Holzschrauben) können selbstschneidend bzw. selbstfurchend in einem Untergrund (insbesondere einem Holzuntergrund) ausgebildet sein. Als Schraubenspitze für Schrauben gemäß exemplarischen Ausführungsbeispielen können eine selbstbohrende bzw. selbstschneidende Spitze eingesetzt werden, die gekniffen oder gewalzt werden kann. Schrauben gemäß exemplarischen Ausführungsbeispielen können zum Beispiel aus Edelstahl (rostfrei), Kohlenstoffstahl, etc. hergestellt werden. Die Schraube kann beschichtet (zum Beispiel gewachst) oder verzinkt werden oder erst verzinkt und dann gewachst werden, um die Gleiteigenschaften der Schraube in einem Untergrund weiter zu verbessern.

Im Folgenden werden exemplarische Ausführungsbeispiele Verweis auf die folgenden Figuren detailliert beschrieben. Die in den Figuren dargestellten exemplarischen Ausführungsbeispiele zeigen nicht alle Merkmale der Erfindung, sondern sie dienen dem Verständnis der Erfindung.
Figur 1 zeigt eine Holzschraube gemäß einem exemplarischen Ausführungsbeispiel mit einer punktförmigen Schraubenspitze und mit eine Diskontinuität aufweisenden Zwischengewindeabschnitten.
Figur 2 zeigt eine vergrößerte Darstellung eines Teils des Schaftabschnitts samt Gewinde der Holzschraube gemäß Figur 1.
Figur 3 bis Figur 7 zeigen schematisch alternative Ausgestaltungen eines Zwischengewindeabschnitts von Schrauben gemäß exemplarischen Ausführungsbeispielen .

Gleiche oder ähnliche Komponenten in unterschiedlichen Figuren sind mit gleichen Bezugsziffern versehen.

Bevor bezugnehmend auf die Figuren exemplarische Ausführungsbeispiele beschrieben werden, sollen noch einige allgemeine Aspekte der Erfindung erläutert werden:
Gemäß einem exemplarischen Ausführungsbeispiel der Erfindung ist eine Schraube bereitgestellt, die ein Gewinde mit als Stufe ausgeformtem Gewindegrund aufweist.

Ausgangspunkt der Überlegungen der vorliegenden Erfinder war eine Holzschraube mit einem kreiszylindrischen Kern. Die vorliegenden Erfinder stellten jedoch fest, dass eine solche herkömmliche Schraube hinsichtlich der Auszugswerte (d.h. des von der Schraube gebotenen Widerstands gegen Herausziehen aus dem Holzuntergrund) und des Bruchdrehmoments (d.h. eines auf den Schraubenkopf ausgeübten Drehmoments bei gleichzeitigen Einspannen des Schaftabschnitts, bei welchem Drehmoment eine unerwünschte Abtrennung im Bereich des Gewindeübergangs erfolgt) noch Verbesserungspotenzial aufwies.

Bei Holzschrauben soll die Flankenfläche, die zum Kopf der Schraube zeigt, besonders hochgeformt sein. Deshalb hat die Anmelderin der vorliegenden Patentanmeldung auch nichtachsparallele Gewindekerne entwickelt, bei denen der Gewindekern nichtachspararallel zur gedachten Mittelachse der Schaube ist (Schräge, Radius an einer Seite). Obwohl derartige Schrauben hervorragende Auszugseigenschaften haben, führt die beschriebene Ausgestaltung der Gewindekerne aber dazu, dass beim Herstellen der Schraube durch Umformwalzen die Schrägen, die in der Walzbacke als Negativ vorhanden sind, die Schraube leicht axial nach oben schieben. Durch die Verschiebung kommt es vor, dass andere zu formende Konturen, die sich in der Walzbacke und auch auf der Schraube befinden, sich nicht wieder finden und diese dadurch nur teilweise oder überhaupt nicht ausgeformt sind. Zwar ist eine solche Schraube leistungsfähig, erfordert während der Herstellung aber Maßnahmen, die das axiale Verschieben der Schraube während des Herstellens unterdrücken.

Indem gemäß einem exemplarischen Ausführungsbeispiel der Erfindung mindestens zwei von mindestens einer Diskontinuität getrennte achsparallele Abschnitte des Gewindes vorgesehen werden, kommt es vorteilhaft nicht zur axialen Verschiebung der Walzrohlinge, was den Herstellungsprozess signifikant vereinfacht. Gleichzeitig können mit einer solchen Schraube hohe Auszugswerte erreicht werden.

Eine solche Schraube ist besonders gut geeignet als Holzschraube (das heißt als Schraube zum Einbringen in einen Holzuntergrund, insbesondere in einen massiven Holzuntergrund) und kann besonders vorteilhaft mit einem in Holz selbstschneidenden Gewinde ausgestattet werden.

Gemäß einem exemplarischen Ausführungsbeispiel ist eine vorzugsweise aus Metall hergestellte Schraube, vorzugsweise für Holzanwendungen, bereitgestellt, wobei der Kern der Holzschraube nicht durchweg parallel zur Schraubenachse geformt wird, sondern stattdessen durch eine strukturelle Diskontinuität in Abschnitte mit unterschiedlichen Radialausdehnungen aufgeteilt wird. Dies führt zu hohen Auszugswerten. Durch die beschriebene Maßnahme entsteht auch eine höhere tragende Gewindeflanke bei gleichem Außendurchmesser der Holzschraube, sowie ein ausgeprägter radialer Druck. Die höhere Gewindeflanke und die Zwischengewindeabschnitte mit Diskontinuität können für Druck oder Zug eingesetzt werden, je nachdem in welche Richtung diese wirken. Durch den Schraubenkern mit hin zur Schraubenspitze gestuft zulaufenden Zwischengewindeabschnitten kann ein hohes Bruchdrehmoment erreicht werden.

**Figur 1** zeigt eine Seitenansicht einer aus Stahl gebildeten, oberflächlich gewachsten Holzschraube 100 gemäß einem exemplarischen Ausführungsbeispiel mit einem Schaftabschnitt 102 mit Gewinde 104 zwischen einer punktförmigen Schraubenspitze 108 und einem Schraubenkopf 106. Der Schaftabschnitt 102 hat mit einer helikal oder schraubenförmig umlaufenden Diskontinuität 114 versehene Zwischengewindeabschnitte 112. Eine zentrale Längsachse oder Schraubenachse ist mit Bezugszeichen 120 gezeigt. **Figur 2** zeigt eine vergrößerte Darstellung eines Teilbereichs des Schaftabschnitts 102 samt Gewinde 104 der Holzschraube 100 gemäß Figur 1.

Die in Figur 1 gezeigte Holzschraube 100 ist so ausgestaltet, dass diese ohne die Notwendigkeit, vor dem Eindrehen der Holzschraube 100 in einen massiven Holzuntergrund (nicht gezeigt) eine Vorbohrung in dem Holzuntergrund zu erstellen (d.h. vorbohrungsfrei), in einen massiven Holzuntergrund eingedreht werden kann. Gemäß exemplarischen Ausführungsbeispielen der Erfindung ist es aus den unten näher beschriebenen Gründen in der Regel sogar erwünscht, auf eine Vorbohrung zu verzichten, da dies zu besonders guten Auszugswerten der eingedrehten Holzschraube 100 führt. Die besonders gute Haltekraft der Holzschraube 100 in einem massiven Holzuntergrund beruht nicht nur auf einem Formschluss zwischen dem selbstschneidenden Gewinde 104 der Holzschraube 100 einerseits und einem in den massiven Holzuntergrund selbstgeschnittenen Gegengewinde, sondern darüber hinaus auf einer Verdrängung und Verdichtung von Holzmaterial durch die sich zur Schraubenspitze 108 hin stufig radial zulaufenden Abschnitte bzw. Zwischengewindeabschnitte 112, die während des Setzvorgangs und im gesetzten Zustand der Holzschraube 100 gegen das verdrängte und komprimierte Holzmaterial allseitig und vollumfänglich um die Holzschraube 100 reibschlüssig drücken.

An einer Rückseite des zentralen Schaftabschnitts 102 mit dem in Holz selbstschneidenden Gewinde 104 schließt sich in dem Ausführungsbeispiel gemäß Figur 1, beabstandet durch einen optionalen gewindefreien Abschnitt 130, der Schraubenkopf 106 mit einem Antrieb 124 an. Der Antrieb 124 ist so ausgebildet, dass ein Drehwerkzeug (nicht gezeigt) in den Antrieb 124 formschlüssig eingreifen kann und mittels Beaufschlagens der Holzschraube 100 mit einem Drehmoment diese vorbohrungsfrei in den massiven Holzuntergrund eindrehen kann. An einer Vorderseite - bezogen auf eine Setzrichtung der Holzschraube 100 - des Schaftabschnitts 102 mündet dessen Gewinde 104 unmittelbar in der an das Gewinde 104 direkt angeschlossenen punktförmigen Schraubenspitze 108, wodurch die vorbohrungsfreie Eindrehbarkeit der Holzschraube 100 in den massiven Holzuntergrund bewirkt bzw. gefördert wird. Genauer gesagt beginnt das Gewinde 104 in unmittelbarer Nähe der Schraubenspitze 108, die hier als punktförmiges Ende 122 der Holzschraube 100 ausgebildet ist. Anders ausgedrückt geht das Gewinde 104 des Schaftabschnitts 102 nahtlos in die Schraubenspitze 108 über. Dadurch kann erreicht werden, dass durch das bloße Aufsetzen der punktförmigen Spitze 122 auf den massiven Holzuntergrund und mittels Ausübens mäßigen Drucks und eines Drehmoments auf den Antrieb 124 die punktförmige Spitze 122 drehend auf den Holzuntergrund gedrückt oder gepresst wird, was dann zu einem Eindrehen der Holzschraube 100 und zu einem Selbstschneiden des Gegengewindes in dem Holzuntergrund führt.

Der Schaftabschnitt 102 erstreckt sich axial (und im Wesentlichen rotationssymmetrisch) entlang der Schraubenachse 120. Das Gewinde 104, das an dem Schaftabschnitt 102 außenseitig angeformt ist, weist ausgehend von dem Schaftabschnitt 102 sich radial erstreckende und helikal umlaufende Gewindegänge 110 auf, welche den radial äußersten Bereich des Schaftabschnitts 102 bilden. An einem jeweiligen Zwischengewindeabschnitt 112, d.h. einem jeweiligen axialen Abschnitt der Schraube 100 zwischen einem jeweils benachbarten Paar von Gewindegängen 110, ist als gezielte mechanische Störstruktur eine Diskontinuität 114 vorgesehen. Mit anderen Worten ist im Bereich der Diskontinuität 114 an dem Zwischengewindeabschnitt 112 ein Formmerkmal gebildet, an welchem die Erstreckungsrichtung der äußeren Oberfläche der Schraube 100 sich nicht parallel zu der Schraubenachse 120 erstreckt. Die Diskontinuität 114 an dem Zwischengewindeabschnitt 112 ist gemäß Figur 1 als Stufe ausgebildet, die zwischen zwei achsparallelen Abschnitten 116, 118 des Zwischengewindeabschnitts 112 mit unterschiedlichen Radien, die in Figur 2 als R1 und R2 bezeichnet sind, ausgebildet. Dabei gilt gemäß Figur 2: R1>R2. Der Zwischengewindeabschnitt 112 weist an der Stufe eine im Wesentlichen senkrecht zu der Schraubenachse 120 verlaufende Übergangsfläche auf.

Wie in Figur 1 und Figur 2 gezeigt, ist die Diskontinuität 114 von beiden, den zugehörigen Zwischengewindeabschnitt 112 axial begrenzenden Gewindegängen 110 axial beabstandet. Die Diskontinuität 114 ist somit räumlich getrennt von dem jeweils stufigen Übergang zwischen einem hinterseitigen Gewindegang 110h und dem achsparallelen Abschnitt 116 einerseits und zwischen einem vorderseitigen Gewindegang 110v und dem anderen achsparallelen Abschnitt 118 andererseits vorgesehen. Die Diskontinuität 114 läuft um die Schraubenachse 120 in mehreren Windungen um, und zwar in spiralförmiger Weise parallel zu den Gewindegängen 110 helikal um die Schraubenachse 120 herum.

Der achsparallele Abschnitt 116 mit dem größeren Radius R1 ist dabei schraubenkopfseitig angeordnet, d.h. ist dem Schraubenkopf 106 näher als der achsparallele Abschnitt 118 mit dem kleineren Radius R2. Entsprechend ist der achsparallele Abschnitt 118 mit dem kleineren Radius R2 schraubenspitzenseitig angeordnet, das heißt der Schraubenspitze 108 näher als der achsparallele Abschnitt 116 mit dem größeren Radius R1. Der achsparallele Abschnitt 116 mit dem größeren Radius R1 weist einen Durchmesser von ungefähr 75 % eines Außendurchmessers D des Gewindes 104 auf. Ferner ist 2R1 ungefähr gleich dem Durchmesser L des gewindefreien Abschnitts 130. Der achsparallele Abschnitt 118 mit dem kleineren Radius R2 hat einen Durchmesser von ungefähr 50 % des Außendurchmessers D des Gewindes 104. Ein kleinster Durchmesser der Holzschraube 100 ist der Durchmesser des Gewindekerns des Gewindes 104 und ist mit d bezeichnet, wobei d=2R2 gilt. Ein Flankenwinkel α der Gewindegänge beträgt 50°

Figur 2 zeigt am Beispiel eines stufigen Zwischengewindeabschnitts 112, dass dessen Diskontinuität 114 derart ausgebildet ist, dass ein sich an einen hinterseitigen Gewindegang 110h anschließendes Zusatzmaterial 200 durch ein sich an einen vorderseitigen Gewindegang 110v anschließendes Fehlmaterial 202 gerade ausgeglichen ist. Somit ist der Zwischengewindeabschnitt 112 gegenüber der Schraubenachse 120 derart teils nach innen, teils nach außen achsparallel versetzt, dass der Zwischengewindeabschnitt 112 einen hypothetischen bzw. virtuellen massenäquivalenten Kreiszylinderkern in der Mitte (siehe Mittelpunkt 204) zwischen dem hinterseitigen Gewindegang 110h und dem vorderseitigen Gewindegang 110v schneidet. Dies zeigt, dass bei Holzschrauben 100 gemäß exemplarischen Ausführungsbeispielen die abgestuften

Zwischengewindeabschnitte 112 bloß durch Materialumformung bzw. -umlagerung von einem vorderen Schraubenbereich zu einem hinteren Schraubenbereich gebildet werden. Diese Materialumformung bzw. -umlagerung kann zum Beispiel während des normalen Herstellungsprozesses der Holzschraube 100 mittels Walzens erfolgen. Damit ist ein aufwändiger zusätzlicher Materialauftrag genauso vermieden wie ein aufwändiger Materialentfernungsprozess. Vielmehr können ohne zusätzlichen Arbeitsgang die nach vorne hin stufenweise schmäler werdenden Abschnitte 116, 118 der Zwischengewindeabschnitte 112 während des normalen Herstellungsprozesses der Holzschraube 100 und somit ohne zusätzlichen Zeitaufwand erfolgen.

Die mit der Diskontinuität 114 versehenen Zwischengewindeabschnitte 112 können während des Walzens des Gewindes 104, mithin mit einem äußerst geringen Zusatzaufwand, ausgebildet werden.

Mit der in Figur 1 und Figur 2 gezeigten Schraube 100 kann die erhaltene Auszugskraft vorteilhaft deutlich erhöht werden:
Im Weiteren werden experimentelle Ergebnisse beschrieben, die aus einem Vergleich einer Holzschraube 100 mit Zwischengewindeabschnitten 112 mit Diskontinuität 114 gemäß exemplarischen Ausführungsbeispielen und einer herkömmlichen Holzschraube mit einem kreiszylindrischen Schraubenkern erhalten wurden. Bei beiden miteinander verglichenen Schrauben handelt es sich um mittels LaserCUSING^{®} hergestellte Schrauben.

In **Tabelle 1** sind Eindrehmomente der herkömmlichen Holzschraube und der Holzschraube 100 gemäß einem exemplarischen Ausführungsbeispiel in einen Fichtenholzuntergrund gegenübergestellt. In beiden Fällen handelt es sich um Holzschrauben mit den Dimensionen 6mm x 80mm. Die Werte der Tabelle 1 sind indikativ für die Kraft, die zum vorbohrungsfreien Eindrehen der jeweiligen Schraube in den Fichtenuntergrund erforderlich ist. Die Ergebnisse wurden bei einer Einschraubtiefe von 50 mm unter Einsatz eines Akkuschraubers (Stufe 1) erhalten. Die gemäß einem exemplarischen Ausführungsbeispiel ausgeführte Holzschraube 100 weist ein kleineres Eindrehmoment gegenüber der herkömmlichen Holzschraube auf.

**Tabelle 1: Eindrehmomente**

| | Herkömmliche Schraube | Holzschraube 100 |
|---|---|---|
| Versuch 1 | 3,23 | 2,78 |
| Versuch 2 | 2,8 | 3,01 |
| Versuch 3 | 3,09 | 2,83 |
| Mittelwert | 3,04 | 2,9 |

In der folgenden **Tabelle 2** sind Auszugskräfte der herkömmlichen Holzschraube und der Holzschraube 100 gemäß dem exemplarischen Ausführungsbeispiel aus dem Fichtenholzuntergrund gegenübergestellt.

**Tabelle 2: Auszugskräfte**

| | Herkömmliche Schraube | Holzschraube 100 |
|---|---|---|
| Versuch 1 | 5,7 | 5,55 |
| Versuch 2 | 5,4 | 6,06 |
| Versuch 3 | 5,19 | 5,89 |
| Mittelwert | 5,43 | 5,83 |

Für einen Fichtenholzuntergrund wurde somit gemessen, welche Kraft erforderlich ist, um die vorbohrungsfrei eingebrachte herkömmliche Holzschraube und die vorbohrungsfrei eingebrachte , gemäß dem exemplarischen Ausführungsbeispiel ausgeführte Holzschraube 100 aus dem Fichtenholzuntergrund herauszuziehen. Die Ergebnisse wurden bei einer Einschraubtiefe von 50 mm erhalten.

Die Messergebnisse zeigen, dass mit der gemäß dem exemplarischen Ausführungsbeispiel ausgeführten Holzschraube 100 deutlich bessere Auszugswerte erreicht werden konnten als mit der herkömmlichen Holzschraube.

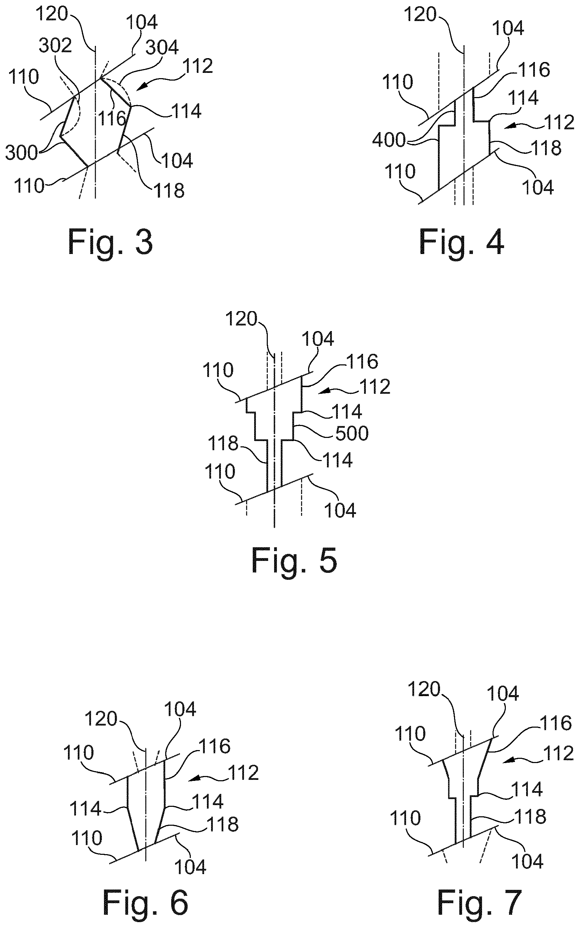

**Figur 3** zeigt eine alternative Ausgestaltung eines Zwischengewindeabschnitts 112 einer Schraube 100 gemäß einem anderen exemplarischen Ausführungsbeispiel.

Gemäß Figur 3 sind der erste Teilabschnitt 116 und der zweite Teilabschnitt 118 jeweils als gegenüber der Schraubenachse 120 abgeschrägter Abschnitt 300 ausgebildet. Die Flanken des ersten Teilabschnitts 116 laufen konisch in Richtung des Schraubenkopfs 106 zu. Die Flanken des zweiten Teilabschnitts 118 laufen konisch in Richtung der Schraubenspitze 108 zu. An der Stelle, an der die beiden Teilabschnitte 116, 116 zusammenlaufen, ist eine Diskontinuität 114 in Form einer Kante gebildet. In Figur 3 ist gestrichelt eingezeichnet, dass ein beliebiger der Teilabschnitte 116, 118 zumindest abschnittsweise konkav (siehe Bezugszeichen 302) und/oder zumindest abschnittsweise konvex (siehe Bezugszeichen 304) geformt sein kann.

**Figur 4** zeigt eine alternative Ausgestaltung eines Zwischengewindeabschnitts 112 einer Schraube 100 gemäß einem anderen exemplarischen Ausführungsbeispiel.

Das Ausführungsbeispiel gemäß Figur 4 unterscheidet sich von jenem gemäß Figur 1 und Figur 2 dadurch, dass gemäß Figur 4 nun der erste Teilabschnitt 116 einen kleineren Radius hat als der zweite Teilabschnitt 118. Beide Teilabschnitte 116, 118 sind als jeweils achsparalleler Abschnitt ausgebildet, an deren Übergangsbereich eine Diskontinuität 114 in Form einer rechtwinkligen Stufe gebildet ist.

**Figur 5** zeigt eine alternative Ausgestaltung eines Zwischengewindeabschnitts 112 einer Schraube 100 gemäß einem anderen exemplarischen Ausführungsbeispiel.

Das Ausführungsbeispiel gemäß Figur 5 hat einen Zwischengewindeabschnitt 112, der aus drei Teilabschnitten 116, 118, 500 gebildet ist, zwischen denen zwei Diskontinuitäten 114 vorgesehen sind. Die drei Teilabschnitte 116, 118, 100 und gemäß Figur 4 alle achsparallel, allerdings können diese alternativ auch andere Formen haben (zum Beispiel konisch, konvex oder konkav).

**Figur 6** zeigt eine alternative Ausgestaltung eines Zwischengewindeabschnitts 112 einer Schraube 100 gemäß einem anderen exemplarischen Ausführungsbeispiel.

Das Ausführungsbeispiel gemäß Figur 6 unterscheidet sich von dem Ausführungsbeispiel gemäß Figur 3 dadurch, dass der erste Teilabschnitt 116 achsparallel ist. Der zweite Teilabschnitt 118 ist hingegen sowohl gemäß Figur 3 als auch gemäß Figur 6 nicht achsparallel.

**Figur 7** zeigt eine alternative Ausgestaltung eines Zwischengewindeabschnitts 112 einer Schraube 100 gemäß einem anderen exemplarischen Ausführungsbeispiel.

Das Ausführungsbeispiel gemäß Figur 7 unterscheidet sich von dem Ausführungsbeispiel gemäß Figur 5 dadurch, dass der erste Teilabschnitt 116 konisch ist. Gemäß Figur 7 ist der erste Teilabschnitt 116 konisch (und somit nicht achsparallel), der zweite Teilabschnitt 118 achsparallel sowie ein zwischen dem ersten Teilabschnitt 116 und dem zweiten Teilabschnitt 118 angeordneter Zwischenabschnitt achsparallel mit einem gegenüber dem zweiten Teilabschnitt 118 größeren Radius.

Gemäß einem anderen Aspekt der Erfindung weist eine Schraube 100 einen sich axial erstreckenden Schaftabschnitt 102 und ein Gewinde 104 an dem Schaftabschnitt 102 auf, das ausgehend von dem Schaftabschnitt 102 sich radial erstreckende Gewindegänge 110 aufweist. Der Schaftabschnitt 102 weist an einem Zwischengewindeabschnitt 112 zwischen benachbarten Gewindegängen 110 eine Diskontinuität 114 auf, wobei sich der Zwischengewindeabschnitt 112 gestuft hin zu einer Schraubenspitze 108 verjüngt.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Schraube (100), aufweisend:
einen sich axial erstreckenden Schaftabschnitt (102);
ein Gewinde (104) an dem Schaftabschnitt (102), das ausgehend von dem Schaftabschnitt (102) sich radial erstreckende Gewindegänge (110) aufweist;
wobei der Schaftabschnitt (102) an einem Zwischengewindeabschnitt (112) zwischen benachbarten Gewindegängen (110) eine Diskontinuität (114) aufweist;
wobei die Diskontinuität (114) an dem Zwischengewindeabschnitt (112) als Stufe ausgebildet ist; und
wobei die Stufe zwischen zwei achsparallelen Abschnitten (116, 118) des Zwischengewindeabschnitts (112) mit unterschiedlichen Radien (R1, R2) ausgebildet ist,
**dadurch gekennzeichnet, dass**
der Zwischengewindeabschnitt (112) an der Stufe eine im Wesentlichen senkrecht zu einer Schraubenachse (120) verlaufende Übergangsfläche aufweist; und
die Diskontinuität (114) von beiden, den zugehörigen
Zwischengewindeabschnitt (112) axial begrenzenden Gewindegängen (110) axial beabstandet
in der Mitte zwischen beiden, den zugehörigen Zwischengewindeabschnitt (112) axial begrenzenden Gewindegängen (110) angeordnet ist.

2. Schraube (100) gemäß Anspruch 1, aufweisend zumindest eines der folgenden Merkmale:
wobei der achsparallele Abschnitt (116) mit dem größeren Radius (R1) schraubenkopfseitig und der achsparallele Abschnitt (118) mit dem kleineren Radius (R2) schraubenspitzenseitig angeordnet ist;
wobei der achsparallele Abschnitt (116) mit dem größeren Radius (R1) einen Durchmesser in einem Bereich zwischen 65 % und 85 % eines Außendurchmessers (D) des Gewindes (104) aufweist;
wobei der achsparallele Abschnitt (118) mit dem kleineren Radius (R2) einen Durchmesser (d) in einem Bereich zwischen 40 % und 60 % eines Außendurchmessers (D) des Gewindes (104) aufweist.

3. Schraube (100) gemäß einem der Ansprüche 1 bis 2, aufweisend zumindest eines der folgenden Merkmale:
wobei an dem Schaftabschnitt (102) zwischen mehr als der Hälfte, bevorzugt zwischen mehr als 75 %, weiter bevorzugt zwischen mehr als 90 %, und höchst bevorzugt zwischen allen benachbarten Gewindegängen (110) ein jeweiliger Zwischengewindeabschnitt (112) mit einer jeweiligen Diskontinuität (114) ausgebildet ist;
wobei die Zwischengewindeabschnitte (112) mit der Diskontinuität (114) gegenüber einer Schraubenachse (120) derart abweichen, dass ein sich an einen jeweils hinterseitigen Gewindegang (110h) anschließendes Zusatzmaterial (200) durch ein sich an den jeweils vorderseitigen Gewindegang (110v) anschließendes Fehlmaterial (202) ausgeglichen ist;
wobei die Zwischengewindeabschnitte (112) mit der Diskontinuität (114) gegenüber einer Schraubenachse (120) derart abweichen, dass die Diskontinuität (114) an dem jeweiligen Zwischengewindeabschnitt (112) einen massenäquivalenten Kreiszylinderkern in der Mitte zwischen einem jeweiligen hinterseitigen Gewindegang (110h) und einem jeweiligen vorderseitigen Gewindegang (110v) schneidet.

4. Schraube (100) gemäß einem der Ansprüche 1 bis 3, ausgebildet als Holzschraube (100) zum, insbesondere vorbohrungsfreien, Einbringen in einen Holzuntergrund, insbesondere in einen massiven Holzuntergrund.

5. Schraube (100) gemäß einem der Ansprüche 1 bis 4, ferner aufweisend:
einen an den Schaftabschnitt (102) rückseitig direkt oder indirekt angeschlossenen Schraubenkopf (106); und/oder
die an den Schaftabschnitt (102) vorderseitig direkt oder indirekt angeschlossene Schraubenspitze (108) zum Eindringen in den Untergrund.

6. Schraube (100) gemäß Anspruch 5, aufweisend zumindest eines der folgenden Merkmale:
wobei die Schraubenspitze (108) als ein punktförmiges Ende (122) gebildet ist, wobei sich das Gewinde (104) ausgehend von dem punktförmigen Ende (122) entlang zumindest eines Teils des Schaftabschnitts (102) erstreckt;
wobei die Schraubenspitze (108) als Bohrspitze, insbesondere mit mindestens einer endseitigen Schneidkante, ausgebildet ist;
wobei der Schraubenkopf (106) mit einem Antrieb (124) zum Drehantreiben der Schraube (100) versehen ist, wobei der Antrieb (124) insbesondere als Längsschlitz, als Kreuzschlitz, als Imbus, als TORX-Antrieb oder als AW-Antrieb ausgebildet ist.

7. Schraube (100) gemäß einem der Ansprüche 1 bis 6, aufweisend zumindest eines der folgenden Merkmale:
wobei die Diskontinuität (114) um eine Schraubenachse (120) vollumfänglich umläuft, insbesondere parallel zu den Gewindegängen (110) helikal um die Schraubenachse (120) umläuft.

8. Verfahren zum Einbringen einer Schraube (100) in einen Untergrund, wobei das Verfahren aufweist:
Ansetzen, insbesondere vorbohrungsfreies Ansetzen, einer Schraubenspitze (108) an einem vorderseitigen Ende der Schraube (100) an den Untergrund;
Antreiben der Schraube (100) mittels Betätigens eines Schraubenkopfs (106) an einem rückseitigen Ende der Schraube (100) zum Ausüben einer Setzkraft auf die Schraube (100) derart, dass die Schraubenspitze (108) in den Untergrund eindringt und ein Gewinde (104) an einem sich axial erstreckenden Schaftabschnitt (102) der Schraube (100) zwischen Schraubenspitze (108) und Schraubenkopf (106), insbesondere selbstschneidend, ein Gegengewinde in dem Untergrund schneidet, wobei an dem Schaftabschnitt (102) zwischen benachbarten, ausgehend von dem Schaftabschnitt (102) sich radial erstreckenden Gewindegängen (110) ein Zwischengewindeabschnitt (112) mit einer Diskontinuität (114) ausgebildet ist, in deren Umgebungsbereich hinein beim axialen Eindringen der Schraube (100) in den Untergrund Material verdrängt wird;
wobei die Diskontinuität (114) an dem Zwischengewindeabschnitt (112) als Stufe ausgebildet ist;
wobei die Stufe zwischen zwei achsparallelen Abschnitten (116, 118) des Zwischengewindeabschnitts (112) mit unterschiedlichen Radien (R1, R2) ausgebildet ist,
**dadurch gekennzeichnet, dass**
der Zwischengewindeabschnitt (112) an der Stufe eine im Wesentlichen senkrecht zu einer Schraubenachse (120) verlaufende Übergangsfläche aufweist; und
die Diskontinuität (114) von beiden, den zugehörigen
Zwischengewindeabschnitt (112) axial begrenzenden Gewindegängen (110) axial beabstandet
in der Mitte zwischen beiden, den zugehörigen Zwischengewindeabschnitt (112) axial begrenzenden Gewindegängen (110) angeordnet ist.

9. Verfahren gemäß Anspruch 8,
wobei die Schraube (100) mittels Drehbetätigens eines Antriebs (124) an dem Schraubenkopf (106) angetrieben wird; oder
wobei die Schraube (100) mittels Ausübens einer rein axialen Setzkraft auf den Schraubenkopf (106) angetrieben wird, insbesondere eingenagelt oder eingeschossen wird.

10. Verfahren zum Herstellen einer Schraube (100) zum Einbringen in einen Untergrund, wobei das Verfahren aufweist:
Ausbilden eines sich axial erstreckenden Schaftabschnitts (102);
Ausbilden eines Gewindes (104) an dem Schaftabschnitt (102), das mit sich ausgehend von dem Schaftabschnitt (102) radial erstreckenden Gewindegängen (110) versehen wird;
Ausbilden einer Diskontinuität (114) an dem Schaftabschnitt (102) an einem Zwischengewindeabschnitt (112) zwischen benachbarten Gewindegängen (110);
wobei die Diskontinuität (114) an dem Zwischengewindeabschnitt (112) als Stufe ausgebildet wird; und
wobei die Stufe zwischen zwei achsparallelen Abschnitten (116, 118) des Zwischengewindeabschnitts (112) mit unterschiedlichen Radien (R1, R2) ausgebildet wird,
**dadurch gekennzeichnet, dass**
der Zwischengewindeabschnitt (112) an der Stufe eine im Wesentlichen senkrecht zu einer Schraubenachse (120) verlaufende Übergangsfläche aufweist; und
die Diskontinuität (114) von beiden, den zugehörigen
Zwischengewindeabschnitt (112) axial begrenzenden Gewindegängen (110) axial beabstandet
in der Mitte zwischen beiden, den zugehörigen Zwischengewindeabschnitt (112) axial begrenzenden Gewindegängen (110) angeordnet wird.

11. Verfahren gemäß Anspruch 10, wobei die Zwischengewindeabschnitte (112) mit der Diskontinuität (114) zumindest teilweise bei einem Walzen des Gewindes (104) ausgebildet werden.

12. Verwendung einer Schraube (100) gemäß einem der Ansprüche 1 bis 7 zum insbesondere vorbohrungsfreien Einbringen in einen Holzuntergrund, insbesondere in einen Massivholzuntergrund.

## Claims

1. Screw (100) comprising:
an axially extending shaft portion (102);
a thread (104) at the shaft portion (102) which comprises radially extending thread turns (110) originating from the shaft portion (102);
wherein the shaft portion (102) comprises a discontinuity (114) at an intermediate thread portion (112) between adjacent thread turns (110);
wherein the discontinuity (114) is formed as a step at the intermediate thread portion (212); and
wherein the step is formed between two axially parallel portions (116, 118) of the intermediate thread portion (112) with different radiuses (R1, R2),
**characterized in that**
the intermediate thread portion (112) comprises a transition surface at the step which transition surface is substantially perpendicular to a screw axis (120); and
the discontinuity (114) is arranged in an axially spaced manner with respect to both thread turns (110) which are axially delimiting the corresponding intermediate thread portion (112), in the center between both thread turns (110) which are axially delimiting the corresponding intermediate thread portion (112).

2. Screw (100) according to claim 1, comprising at least one of the following features:
wherein the axially parallel portion (116) with a larger radius (R1) is arranged at a side of a screw head and the axially parallel portion (118) with the smaller radius (R2) is arranged at a side of a screw tip;
wherein the axially parallel portion (116) with the larger radius (R1) comprises a diameter in a range between 65 % and 85 % of an outer diameter (D) of the thread (104);
wherein the axially parallel portion (118) with the smaller radius (R2) comprises a diameter (d) in a range between 40 % and 60 % of an outer diameter (D) of the thread (104).

3. Screw (100) according to one of the claims 1 to 2, comprising at least one of the following features:
wherein at the shaft portion (102) between more than the half, preferably between more than 75 %, further preferably between more than 90 %, and highly preferred between all adjacent thread turns (110), a respective intermediate thread portion (112) with a respective discontinuity (114) is formed;
wherein the intermediate thread portions (112) deviate with the discontinuity (114) with respect to a screw axis (120) such that an additional material (200) which is adjoining a respectively rear thread turn (110h) is balanced out by a lack of material (202) which is adjoining the respective front thread turn (110v);
wherein the intermediate thread portions (112) deviate with the discontinuity (114) with respect to a screw axis (120) such that the discontinuity (114) at a respective intermediate thread portion (112) intersects a mass equivalent circular cylinder core in the center between a respective rear thread turn (110h) and a respective front thread turn (110v).

4. Screw (100) according to one of the claims 1 to 3, configured as wood screw (100) for, in particular predrilling-freely, introducing in a wood underground, in particular in a massive wood underground.

5. Screw (100) according to one of the claims 1 to 4, further comprising:
a screw head (106) which is directly or indirectly connected to the shaft portion (102) at the rear side; and/or
the screw tip (108) which is directly or indirectly connected to the shaft portion (102) at the front side, for introducing in the underground.

6. Screw (100) according to claim 5, comprising at least one of the following features:
wherein the screw tip (108) is formed as a point-shaped end (122), wherein the thread (104) extends in a manner originating from the point-shaped end (122) along at least a part of the shaft portion (102);
wherein the screw tip (108) is configured as a drilling tip, in particular with at least one end-sided cutting edge;
wherein the screw head (106) is provided with a drive (124) for rotationally driving the screw (100), wherein the drive (124) is in particular configured as a longitudinal slit, as a cross slit, as an Imbus, as a Torx-drive, or as an AW-drive.

7. Screw (100) according to one of the claims 1 to 6, comprising at least one of the following features:
wherein the discontinuity (114) fully circumferentially surrounds a screw axis (120), in particular helically surrounds the screw axis (120) in parallel with respect to the thread turns (110).

8. Method for introducing a screw (100) in an underground, wherein the method comprises:
placing, in particular predrilling-freely placing, a screw tip (108) at a front end of the screw (100) on the underground;
driving the screw (100) by actuating a screw head (106) at a rear end of the screw (100) for exerting a placing force on the screw (100), such that the screw tip (108) introduces into the underground, and a thread (104) at an axially extending shaft portion (102) of the screw (100) between the screw tip (108) and the screw head (106), in particular in a self-cutting manner, cuts a counterthread in the underground, wherein at the shaft portion (102) between adjacent thread turns (110) which are radially extending from the shaft portion (102), an intermediate thread portion (112) with a discontinuity (114) is formed, into whose surrounding region material is displaced when axially introducing the screw (100) in the underground;
wherein the discontinuity (114) is formed as a step at the intermediate thread portion (112);
wherein the step is formed between two axially parallel portions (116, 118) of the intermediate thread portion (112) with different radiuses (R1, R2),
**characterized in that**
the intermediate thread portion (112) comprises a transition surface at the step which transition surface is substantially perpendicular to a screw axis (120); and
the discontinuity (114) is arranged in an axially spaced manner with respect to both thread turns (110) which are axially delimiting the corresponding intermediate thread portion (112), in the center between both thread turns (110) which are axially delimiting the corresponding intermediate thread portion (112).

9. Method according to claim 8,
wherein the screw (100) is driven by rotationally actuating a drive (124) at the screw head (106); or
wherein the screw (100) is driven by exerting a purely axial placing force on the screw head (106), is in particular nailed-in or shot-in.

10. Method for manufacturing a screw (100) for introducing in an underground, wherein the method comprises:
forming an axially extending shaft portion (102);
forming a thread (104) at the shaft portion (102), which is provided with thread turns (110) which are radially extending from the shaft portion (102);
forming a discontinuity (114) at the shaft portion (102) at an intermediate thread portion (112) between adjacent thread turns (110);
wherein the discontinuity (114) is formed as a step at the intermediate thread portion (112); and
wherein the step is formed between two axially parallel portions (116, 118) of the intermediate thread portion (112) with different radiuses (R1, R2),
**characterized in that**
the intermediate thread portion (112) comprises a transition surface at the step which transition surface is substantially perpendicular with respect to a screw axis (120); and
the discontinuity (114) is arranged in an axially spaced manner with respect to both thread turns (110) which are axially delimiting the corresponding intermediate thread portion (112), in the center between both thread turns (110) which are axially delimiting the corresponding intermediate thread portion (112).

11. Method according to claim 10, wherein the intermediate thread portions (112) with the discontinuity (114) are formed at least partially by rolling the thread (104).

12. Use of the screw (100) according to one of the claims 1 to 7 for, in particular predrilling-freely, introducing in a wood underground, in particular in a massive wood underground.

## Revendications

1. Vis (100), présentant :
une section de tige (102) s'étendant de manière axiale ;
un filetage (104) sur la section de tige (102), qui présente des pas de filetage (110) s'étendant de manière radiale en partant de la section de tige (102) ;
dans laquelle la section de tige (102) présente une discontinuité (114) sur une section de filetage intermédiaire (112) entre des pas de filetage (110) adjacents ;
dans laquelle la discontinuité (114) est réalisée en tant que palier sur la section de filetage intermédiaire (112) ; et
dans laquelle le palier est réalisé entre deux sections axialement parallèles (116, 118) de la section de filetage intermédiaire (112) avec des rayons différents (R1, R2),
**caractérisée en ce que**
la section de filetage intermédiaire (112) présente sur le palier une surface de transition s'étendant sensiblement de manière perpendiculaire par rapport à un axe de vis (120) ;
et
la discontinuité (114) est disposée au centre entre deux pas de filetage (110) délimitant axialement la section de filetage intermédiaire (112) associée à distance axialement de deux pas de filetage (110) délimitant axialement la section de filetage intermédiaire (112) associée.

2. Vis (100) selon la revendication 1, présentant au moins une des caractéristiques suivantes :
dans laquelle la section axialement parallèle (116) est disposée du côté de la tête de vis avec le rayon le plus grand (R1) et la section axialement parallèle (118) est disposée du côté de la pointe de vis avec le rayon le plus petit (R2) ;
dans laquelle la section axialement parallèle (116) avec le rayon le plus grand (R1) présente un diamètre dans la plage entre 65 % et 85 % d'un diamètre extérieur (D) du filetage (104) ;
dans laquelle la section axialement parallèle (118) avec le rayon plus petit (R2) présente un diamètre (d) dans une plage entre 40 % et 60 % d'un diamètre extérieur (D) du filetage (104).

3. Vis (100) selon l'une quelconque des revendications 1 à 2, présentant au moins une des caractéristiques suivantes :
dans laquelle une section de filetage intermédiaire (112) respective avec une discontinuité (114) respective est réalisée sur la section de tige (102) entre plus de la moitié, de manière préférée entre plus de 75 %, de manière davantage préférée entre plus de 90 %, et de manière préférée entre toutes entre tous les pas de filetage (110) associés ;
dans laquelle les sections de filetage intermédiaires (112) avec la discontinuité (114) divergent par rapport à un axe de vis (120) de telle manière qu'un matériau supplémentaire (200) se raccordant à un pas de filetage respectivement côté arrière (110h) est compensé par un matériau manquant (202) se raccordant au pas de filetage respectivement côté avant (110v) ;
dans laquelle les sections de filetage intermédiaires (112) avec la discontinuité (114) divergent de telle manière par rapport à un axe de vis (120) que la discontinuité (114) sur la section de filetage intermédiaire (112) respective coupe un noyau de cylindre circulaire à masse équivalente au centre entre un pas de filetage côté arrière (110h) respectif et un pas de filetage côté avant (110v) respectif.

4. Vis (100) selon l'une quelconque des revendications 1 à 3, réalisée en tant que vis en bois (100) destinée à être introduite, en particulier sans perçage préalable, dans un support en bois, en particulier dans un support en bois massif.

5. Vis (100) selon l'une quelconque des revendications 1 à 4, présentant en outre :
une tête de vis (106) raccordée directement ou indirectement côté arrière à la section de tige (102) ; et/ou
la pointe de vis (108) raccordée directement ou indirectement côté avant à la section de tige (102), destinée à être enfoncée dans le support.

6. Vis (100) selon la revendication 5, présentant au moins une des caractéristiques suivantes :
dans laquelle la pointe de vis (108) est formée en tant qu'une extrémité en forme de point (122), dans laquelle le filetage (104) s'étend en partant de l'extrémité en forme de point (122) le long d'au moins une partie de la section de tige (102) ;
dans laquelle la pointe de vis (108) est réalisée en tant que pointe de perçage, en particulier avec au moins une arête tranchante côté extrémité ;
dans laquelle la tête de vis (106) est pourvue d'un entraînement (124) pour entraîner en rotation la vis (100), dans laquelle l'entraînement (124) est réalisé en particulier en tant qu'entaille longitudinale, en tant qu'entaille en croix, en tant qu'imbus, en tant qu'entraînement TORX ou en tant qu'entraînement AW.

7. Vis (100) selon l'une quelconque des revendications 1 à 6, présentant au moins une des caractéristiques suivantes :
dans laquelle la discontinuité (114) s'étend tout autour sur la totalité de la périphérie d'un axe de vis (120), en particulier s'étend en hélice tout autour de l'axe de vis (120) de manière parallèle aux pas de vis (110) .

8. Procédé d'introduction d'une vis (100) dans un support, dans lequel le procédé présente :
le placement, en particulier le placement sans perçage préalable, d'une pointe de vis (108) sur une extrémité côté avant de la vis (100) sur le support ;
l'entraînement de la vis (100) au moyen de l'actionnement d'une tête de vis (106) sur une extrémité côté arrière de la vis (100) pour exercer une force de placement sur la vis (100) de telle manière que la pointe de vis (108) est enfoncée dans le support et un filetage (104) sur une section de tige (102), s'étendant de manière axiale, de la vis (100) entre la pointe de vis (108) et la tête de vis (106), coupe, en particulier de manière autotaraudante, un contre-filetage dans le support, dans lequel est réalisée sur la section de tige (102) entre des pas de filetage (110) adjacents, s'étendant de manière radiale en partant de la section de tige (102), une section de filetage intermédiaire (112) avec une discontinuité (114), à l'intérieur de la zone environnante de laquelle du matériau est repoussé lors de l'introduction axiale de la vis (100) dans le support ;
dans lequel la discontinuité (114) est réalisée sur la section de filetage intermédiaire (112) en tant que palier ;
dans lequel le palier est réalisé entre deux sections axialement parallèles (116, 118) de la section de filetage intermédiaire (112) avec des rayons (R1, R2) différents,
**caractérisé en ce que**
la section de filetage intermédiaire (112) présente sur le palier une surface de transition s'étendant de manière sensiblement perpendiculaire par rapport à un axe de vis (120) ;
et
la discontinuité (114) est disposée au centre entre deux pas de filetage (110) délimitant axialement la section de filetage intermédiaire (112) associée, à distance axialement des deux pas de filetage (110) délimitant axialement la section de filetage intermédiaire (112) associée.

9. Procédé selon la revendication 8,
dans lequel la vis (100) est entraînée sur la tête de vis (106) au moyen d'un actionnement rotatif d'un entraînement (124) ; ou
dans lequel la vis (100) est entraînée en exerçant une force de pose purement axiale sur la tête de vis (106), en particulier est clouée ou insérée.

10. Procédé de fabrication d'une vis (100) destinée à être introduite dans un support, dans lequel le procédé présente :
la réalisation d'une section de tige (102) s'étendant de manière axiale ;
la réalisation d'un filetage (104) sur la section de tige (102), qui est pourvu de pas de filetage (110) s'étendant de manière radiale en partant de la section de tige (102) ;
la réalisation d'une discontinuité (114) sur la section de tige (102) sur une section de filetage intermédiaire (112) entre des pas de filetage (110) adjacents ;
dans lequel la discontinuité (114) est réalisée en tant que palier sur la section de filetage intermédiaire (112) ; et
dans lequel le palier est réalisé entre deux sections axialement parallèles (116, 118) de la section de filetage intermédiaire (112) avec des rayons (R1, R2) différents,
**caractérisé en ce que**
la section de filetage intermédiaire (112) présente sur le palier une surface de transition s'étendant de manière sensiblement perpendiculaire par rapport à un axe de vis (120) ;
et
la discontinuité (114) est disposée au centre entre deux pas de filetage (110) délimitant de manière axiale la section de filetage intermédiaire (112) associée à distance axialement des deux pas de filetage (110) délimitant axialement la section de filetage intermédiaire (112) associée.

11. Procédé selon la revendication 10, dans lequel les sections de filetage intermédiaires (112) sont réalisées avec la discontinuité (114) au moins en partie lors d'un laminage du filetage (104).

12. Utilisation d'une vis (100) selon l'une quelconque des revendications 1 à 7 destinée à être introduite en particulier sans perçage préalable dans un support en bois, en particulier dans un support en bois massif.
